Europäisches Patentamt

(19) European Patent Office

Office européen des brevets

(11) Numéro de publication: **0 296 538**
**A1**

(12) # DEMANDE DE BREVET EUROPEEN

(21) Numéro de dépôt: **88109865.1**

(51) Int. Cl.⁴: **F16C 29/06**

(22) Date de dépôt: **21.06.88**

(30) Priorité: **26.06.87 CH 2415/87**

(43) Date de publication de la demande:
**28.12.88 Bulletin 88/52**

(84) Etats contractants désignés:
**DE FR GB IT SE**

(71) Demandeur: **EGIS S.A.**
**Rue Eugène de Coulon 5**
**CH-2022 Bevaix(CH)**

(72) Inventeur: **Geuggis, Michel**
**Chemin Beau-Site 3**
**CH-2016 Cortaillod(CH)**

(74) Mandataire: **Robert, Jean S.**
**51, route du Prieur**
**CH-1257 Landecy (Genève)(CH)**

(54) **Dispositif à roulement pour le guidage de pièces mobiles à mouvement linéaire.**

(57) Les organes de roulement interposés entre le rail de guidage (1) profilé, et l'étrier coulissant (3), sont constitués par des rouleaux cylindriques (5) logés dans des dégagements annulaires (6) ménagés dans l'étrier (3). Les rouleaux (5) sont maintenus en place par des entretoises profilées (7) en matière plastique, interposées entre eux, et qui sont engagées, par leurs extrémités, dans des gorges que présentent les parois latérales des dégagements annulaires (6). Ainsi, le contact entre le rail (1) et l'étrier (3) n'est pas ponctuel, comme avec des billes, mais linéaire, ce qui permet d'augmenter la charge, les organes de roulement, du fait de leur forme cylindrique, étant en outre faciles à maintenir en place et à guider sur l'étrier (3).

FIG. 1

EP 0 296 538 A1

# Dispositif à roulement pour le guidage de pièces mobiles à mouvement linéaire

La présente invention a pour objet un dispositif à roulement pour le guidage de pièces mobiles à mouvement linéaire comprenant au moins un rail profilé sur lequel est engagé au moins un étrier, avec interposition d'organes de roulement, portés par l'étrier, montés sur celui-ci de manière à pouvoir se déplacer le long d'une trajectoire annulaire fermée, ce qui permet un mouvement relatif entre ledit étrier et ledit rail.

De tels dispositifs à roulement, que l'on appelle aussi, plus simplement, roulements linéaires ou glissières à roulement, sont connus en soi.

Jusqu'à présent, leurs organes de roulement ont toujours été constitués par des billes. Celles-ci présentent certains inconvénients, d'une part en raison du fait que leur contact avec les éléments entre lesquels elles sont interposées est ponctuel, et d'autre part en raison du fait qu'il est malaisé de les maintenir en place sur l'étrier ou patin se déplaçant le long du rail de guidage afin qu'elles ne s'en échappent pas. Dans les dispositifs connus, à billes, on emploie le plus souvent, pour retenir les billes, une cage constituée par une pièce mince, par exemple en tôle, percée de trous d'un diamètre légèrement inférieur à celui des billes, logée à l'intérieur du patin et dans les trous de laquelle les billes sont partiellement engagées.

Le but de la présente invention est d'améliorer les dispositifs à roulement linéaire en éliminant l'inconvénient du contact ponctuel des billes avec les organes entre lesquels elles sont interposées et en facilitant leur retenue et leur guidage sur l'étrier ou patin s'engageant sur le rail de guidage.

Ce but est atteint grâce aux moyens définis dans la revendication 1.

Le dessin représente, à titre d'exemple, une forme d'exécution de l'objet de l'invention.

La fig. 1 est une vue en perspective d'un dispositif à roulement pour le guidage de pièces mobiles à mouvement linéaire.

La fig. 2 est une coupe en élévation d'un détail, à échelle agrandie.

La fig. 3 est une coupe d'un détail à échelle encore agrandie.

La fig. 4 est une coupe suivant la ligne IV-IV de la fig. 2, certains éléments étant ôtés, et

La fig. 5 est une coupe analogue, mais qui comporte lesdits éléments précédemment ôtés.

Le dispositif représenté, destiné à être utilisé dans les machines-outils, comprend un rail de guidage 1, profilé en X, sur lequel se déplace longitudinalement, dans la direction de la flèche 2, un étrier ou patin 3 qui porte quatre trains 4 de rouleaux cylindriques 5 agencés de manière à suivre chacun, sur l'étrier 3, un chemin annulaire. Ces trains 4 de rouleaux pourraient être au nombre de trois, les deux trains supérieurs pouvant être remplacés par un seul.

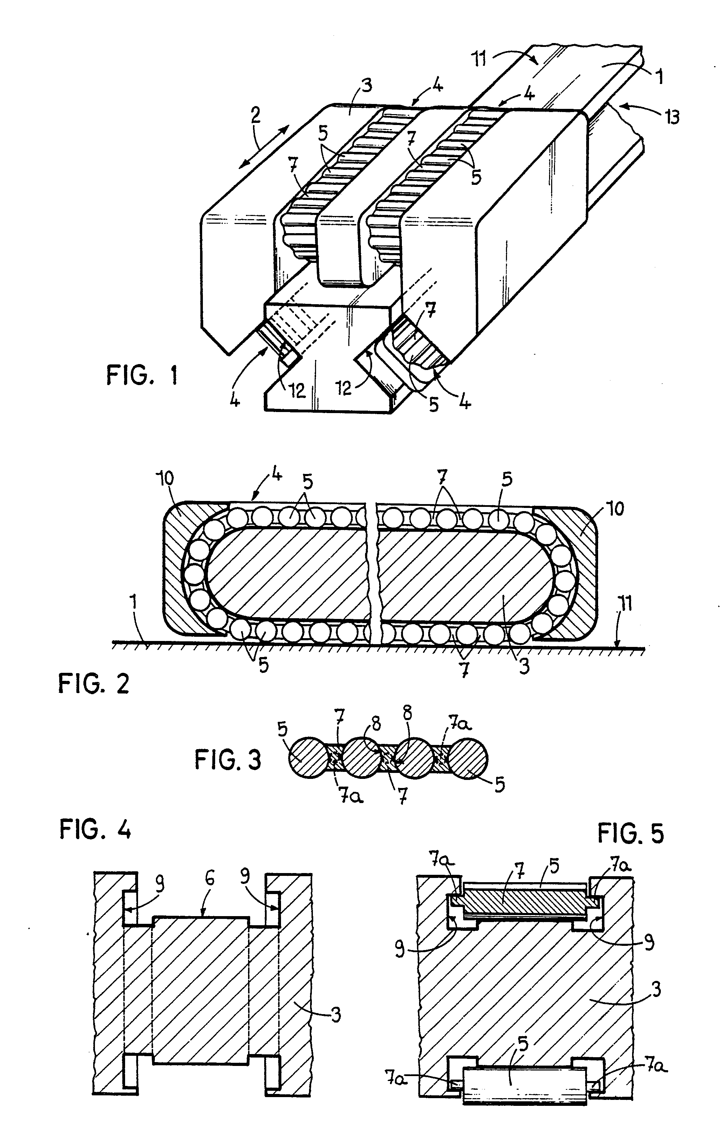

Les rouleaux 5 de chaque train 4 sont logés dans des dégagements annulaires 6 ménagés dans l'étrier 3, dégagements dans lesquels ils sont maintenus par des entretoises profilées 7, en matière plastique, interposées entre eux. Ces entretoises présentent chacune deux creusures latérales 8, cylindriques (fig. 3), dans lesquelles les rouleaux 5 s'engagent partiellement. Ces entretoises présentent chacune deux tétons d'extrémité 7a (fig. 5) engagés dans des gorges 9 (fig. 4) que présentent les parois latérales des dégagements annulaires 6.

Les parties d'extrémité, arrondies, des dégagements annulaires 6 sont munies de couvercles 10 (fig. 2), qui n'ont pas été représentés à la fig. 1, qui maintiennent en place les rouleaux et les entretoises et les empêchent de quitter intempestivement le dégagement 6 dans lequel ils sont logés.

Les rouleaux des deux trains 4 supérieurs prennent appui sur la face supérieure, désignée par 11, du rail 1, alors que les trains 4 latéraux de rouleaux prennent appui sur deux faces inclinées 12, tournées vers le bas, de deux dièdres "rentrants", désignés par 13, que présente le rail 1.

Grâce à la présente disposition, le contact entre les organes de roulement et les éléments --rail 1 et étrier 3-- entre lesquels ils sont interposés est linéaire et non pas ponctuel, ce qui assure une parfaite rigidité de l'assemblage, radialement, verticalement et vis-à-vis des efforts de torsion et permet des charges supérieures. De plus, les organes de roulement, en l'occurrence les rouleaux 5, sont aisément maintenus en place et guidés sur l'étrier 3 par les entretoises 6.

L'invention n'est pas limitée à la forme d'exécution décrite et représentée : c'est ainsi que les rouleaux pourront être remplacés par tous organes de roulement cylindriques tels que des aiguilles ou des galets, par exemple. De même, le profil des rails de guidage pourra être différent de celui représenté dans l'exemple décrit ci-dessus.

L'invention pourra également s'appliquer au cas particulier de coulisses croisées comprenant deux rails parallèles fixes et deux rails parallèles mobiles, perpendiculaires aux premiers. Des étriers du genre de l'étrier 3 de l'exemple décrit ci-dessus, mais doubles et croisés, seront interposés entre les paires de rails, coulissant sur les rails fixes et supportant de façon coulissante les rails mobiles.

## Revendications

1. Dispositif à roulement pour le guidage de pièces mobiles à mouvement linéaire, comprenant au moins un rail profilé sur lequel est engagé au moins un étrier, avec interposition d'organes de roulement, portés par l'étrier, montés sur celui-ci de manière à pouvoir se déplacer le long d'un chemin annulaire fermé, ce qui permet un mouvement relatif entre ledit étrier et ledit rail, caractérisé par le fait que lesdits organes de roulement sont cylindriques.

2. Dispositif suivant la revendication 1, caractérisé par le fait que les organes de roulement cylindriques sont maintenus en place sur l'étrier par des entretoises profilées qui s'engagent, par leurs extrémités, dans des gorges que présente à cet effet ledit étrier.

3. Dispositif suivant la revendication 2, caractérisé par le fait que lesdites gorges sont ménagées dans les parois latérales d'un dégagement annulaire que présente ledit étrier et dans lequel sont logés lesdits organes de roulement cylindriques.

4. Dispositif suivant la revendication 1, caractérisé par le fait que les organes de roulement cylindriques sont constitués par des rouleaux.

5. Dispositif suivant la revendication 1, caractérisé par le fait que les organes de roulement cylindriques sont constitués par des aiguilles.

6. Dispositif suivant la revendication 1, caractérisé par le fait que les organes de roulement cylindriques sont constitués par des galets.

FIG. 1

FIG. 2

FIG. 3

FIG. 4

FIG. 5

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.4) |
|---|---|---|---|
| X | FR-A-2 557 653  (TERAMACHI) <br> * En entier * <br> --- | 1,4 | F 16 C  29/06 |
| A | EP-A-0 076 754  (MIGAUD) <br> * Page 4, ligne 34 - page 5, ligne 10; page 7, lignes 11-15; figures 2,3 * <br> --- | 1-3,6 | |
| P,A | WO-A-8 802 447  (LIPETSKY) <br> * Résumé; figures 1,2 * <br> --- | 1-3 | |
| A | FR-A-2 266 821  (SCHAEFFLER) <br> * En entier * <br> --- | 1-4 | |
| A | FR-A-1 116 656  (WEBER) <br> * Page 1, colonne de droite, dernier paragraphe * <br> ----- | 1,5 | |

**DOMAINES TECHNIQUES RECHERCHES (Int. Cl.4)**

F 16 C
B 23 Q

Le présent rapport a été établi pour toutes les revendications

| Lieu de la recherche | Date d'achèvement de la recherche | Examinateur |
|---|---|---|
| LA HAYE | 29-09-1988 | ORTHLIEB CH.E. |